# EUROPEAN PATENT APPLICATION

(11) **EP 4 517 081 A1**
(43) Date of publication of application: **05.03.2025**
(21) Application number: 22940409.0
(22) Date of filing: 25.04.2022
(51) Int. Cl.: F03D 1/04, F03D 80/70

(54) **ROLLING-BEARING PERIPHERAL SUPPORT SYSTEM**

(71) Applicant: Calle Madrid, Alfredo Raúl, Lurigancho, Lima 15 (PE)
(72) Inventor: Calle Madrid, Alfredo Raúl, Lurigancho, Lima 15 (PE)
(74) Representative: Herrero & Asociados, S.L.
(86) International application number: PCT/PE2022/050008
(87) International publication number: WO 2023/211293

(57) **Abstract**

The present invention relates to a peripheral bearing support system which is suitable for stably supporting a peripheral support turbine by means of a peripheral bearing, and comprising a fixed element of the peripheral support, a rotating washer element, a bearing transition element and a non-conventional axial bearing; wherein the washer rotating element is suitable to be in contact with the peripheral support turbine and is positioned in between two ball beds of the non-conventional axial bearing; wherein each ball bed is between said washer rotating element and one of the sections of the bearing transition element.

## Description

### TECHNICAL FIELD

The present invention relates to the technical field of peripheral support turbine bearing devices in wind turbine systems, more specifically, it relates to a peripheral bearing support system for peripheral support wind turbines.

### PRIOR ART

In the prior art, the background KR20150050927A, published on May 11, 2015, is known, which refers to a pitch bearing with gear teeth for a wind turbine, wherein it can be seen that this comprises a double row of rolling elements between the outer ring and the outer ring. Other background showing a double row of balls for a bearing for wind power generation equipment are patent document CN109488693A, which was published on March 19, 2019 and patent document JP2006177447A, which was published on July 6, 2006. However, this background does not mention any possibility of application in turbines supported through a peripheral ring of large dimensions. On the other hand, the state of the art does not disclose the possibility of constructing a bearing of large dimensions (several meters in diameter) that does not require supporting neither the axial load nor the speed of revolutions of conventional bearings, which can be modular by its construction in individual and identical arc pieces, overcoming the technical limitation linked to constructing a bearing of large dimensions in a single piece.

For the proper understanding of the present invention, its specific application in wind turbines of the type that are supported by a peripheral ring, and not by the central shaft, should be taken into account.

### BRIEF DESCRIPTION OF THE INVENTION

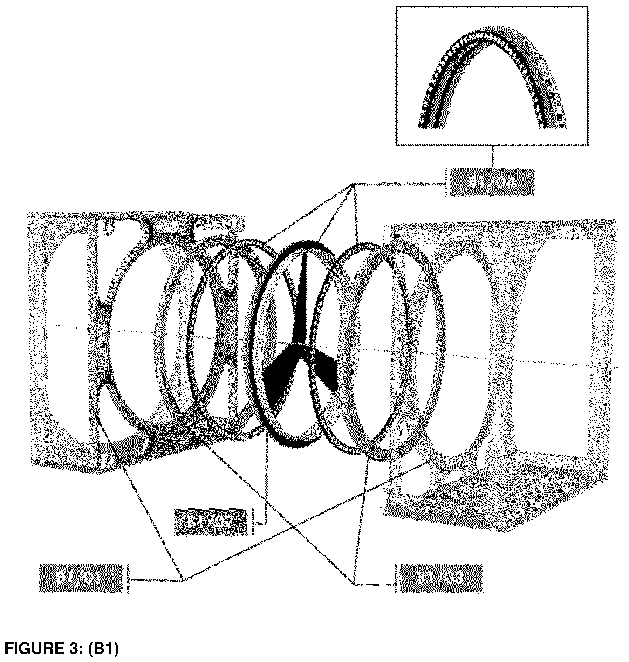

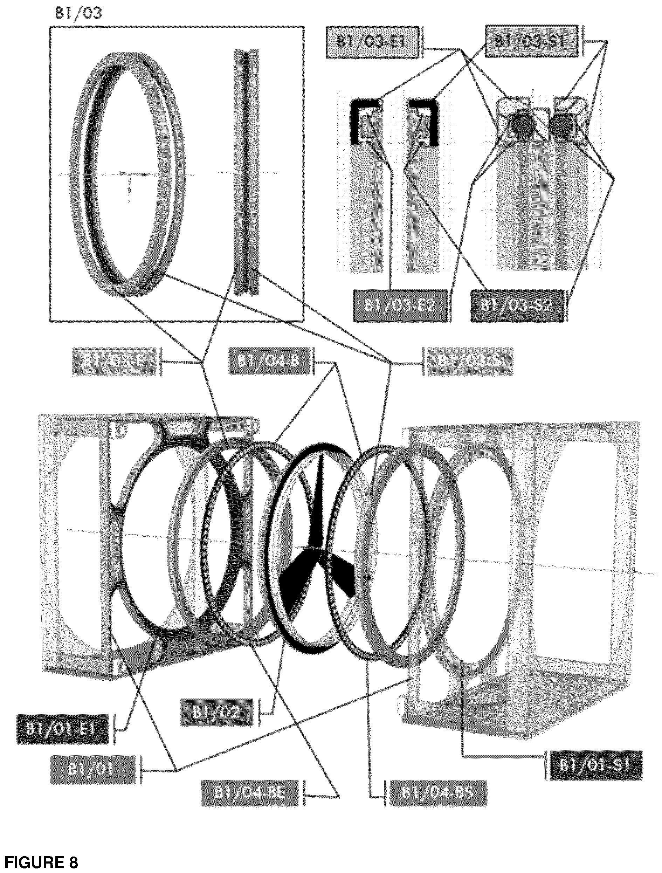

The present invention relates to a peripheral bearing support system which is suitable for stably supporting a peripheral support turbine (A) by means of a peripheral bearing, and comprising a fixed element of the peripheral support (B1/01), a rotating washer element (B1/02), a bearing transition element (B1/03) and a non-conventional axial bearing (B1/04), according to Figure 3;
wherein the fixed element of the peripheral support (B1/01), according to Figure 4, includes a fixed element of the peripheral support inlet section (B1/01-E) and a fixed element of the peripheral support outlet section (B1/01-S); wherein each section comprises a circular cavity (B1/01-E1 or B1/01-S1, as appropriate) and wherein each cavity accommodates either an inlet section of the bearing transition element (B1/03-E), according to Figure 5, or an outlet section of the bearing transition element (B1/03-S), according to Figure 6;
wherein the washer rotating element (B1/02), according to Figure 8, is located in between the two ball beds (B1/04-B) of the non-conventional axial bearing (B1/04); wherein each ball bed (B1/04-B) is between said washer rotating element (B1/02) and one of the sections of the bearing transition element (B1/03).

The object of the present invention is to provide a support system by means of a bearing with two ball beds suitable for a peripheral support wind turbine (turbines supported from the periphery instead of being supported from the axial shaft), that is to say, a bearing of large dimensions is provided which does not require to support high revolutions or axial loads and can be modular by its construction in individual and identical arc pieces, thus overcoming the technical limitation linked to building a bearing of large dimensions in a single piece.

### BRIEF DESCRIPTION OF THE FIGURES

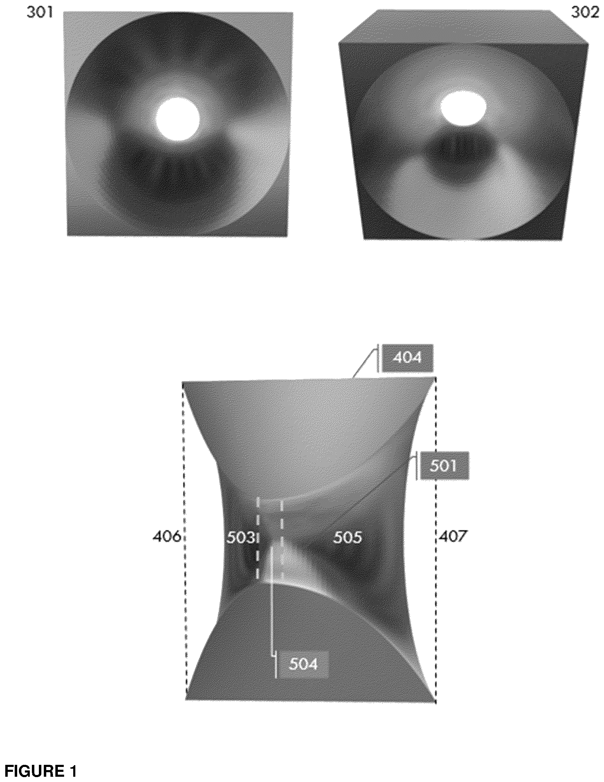

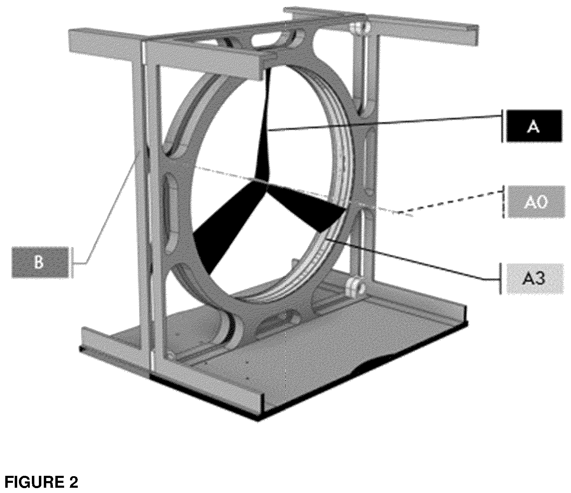

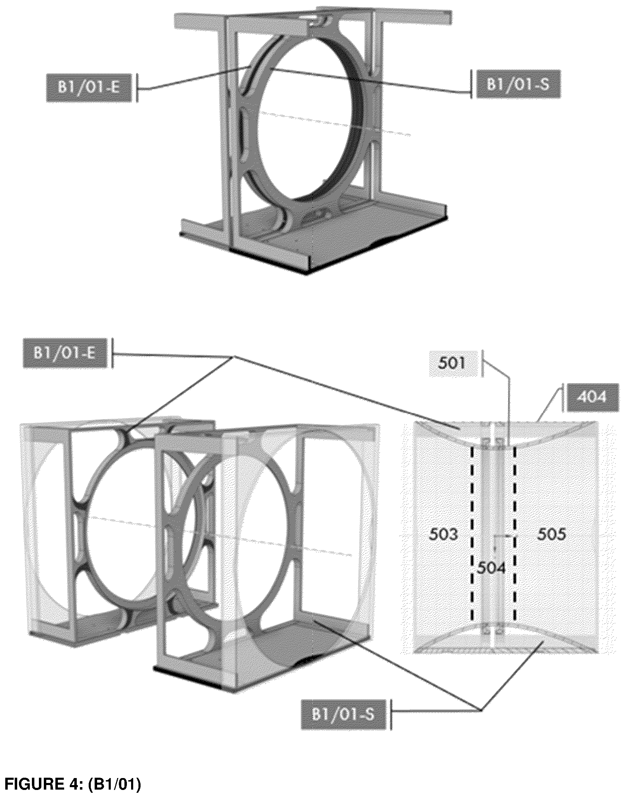

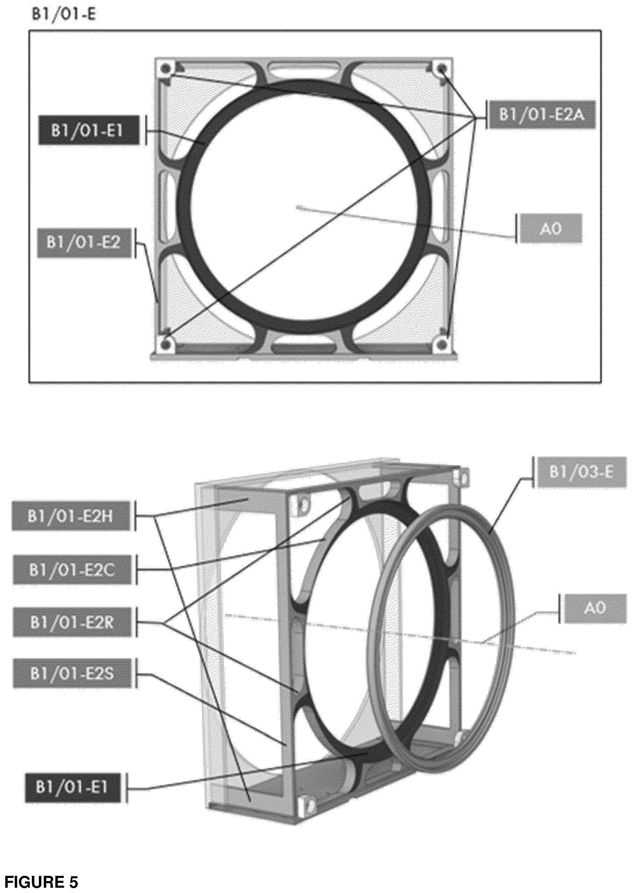

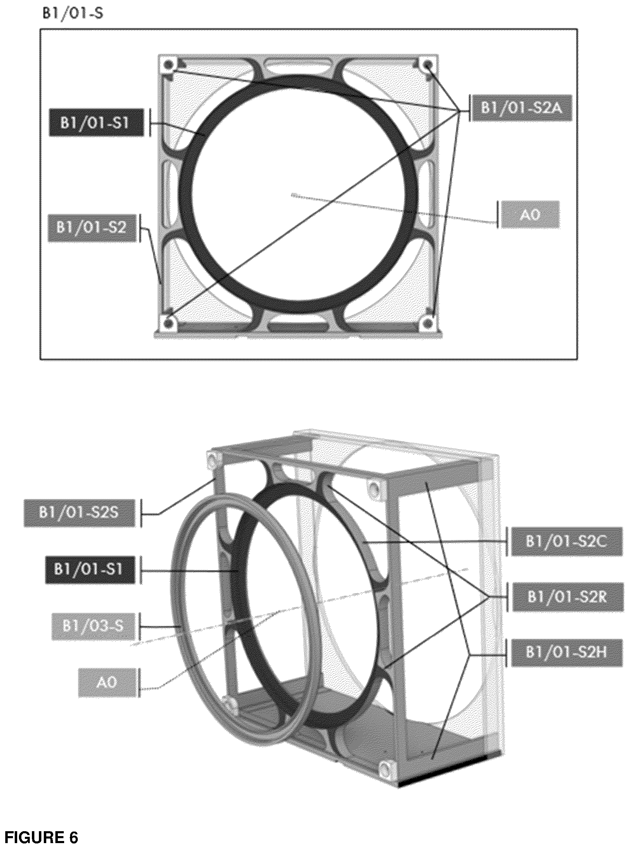

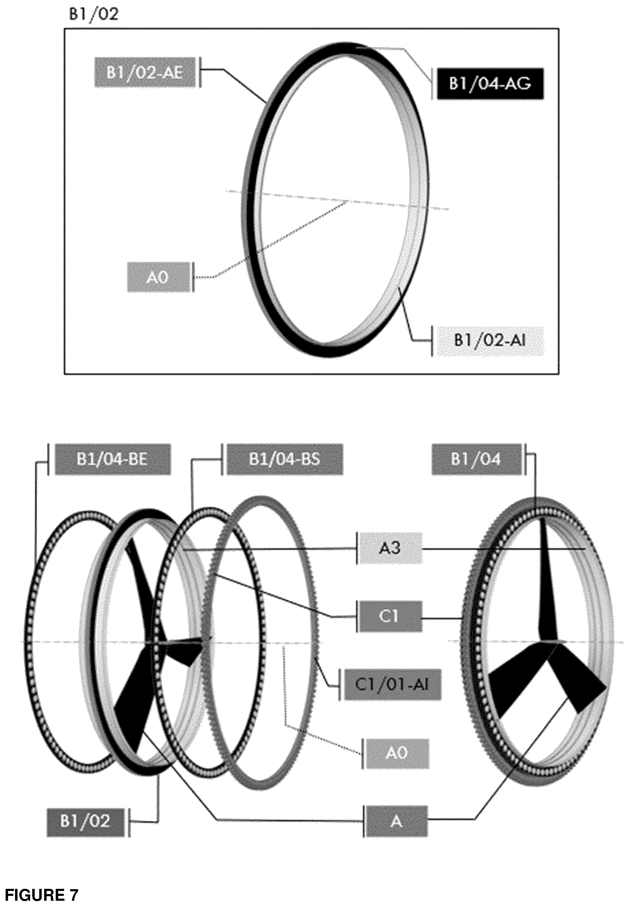

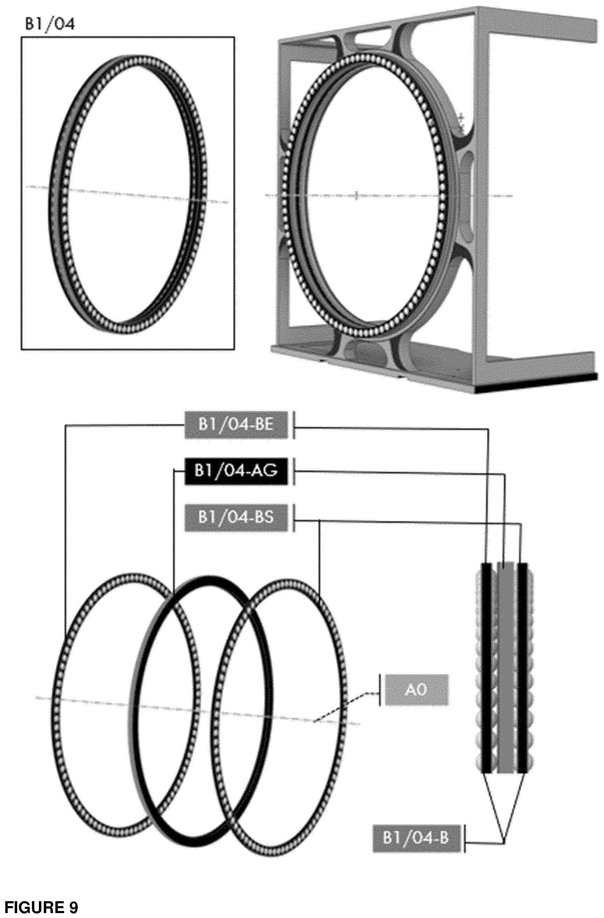

**FIGURE 1****: The Wind Cell**
   301 Front view of the Wind Cell
   302 Oblique view of the Wind Cell
   404 Adjacent External Section
   501 Aerodynamic Internal Chamber
   503 Pressure Generating Space
   504 Critical Space
   505 Turbulence Suppressor Space
   406 Wind Cell Inlet Opening
   407 Wind Cell Outlet Opening
**FIGURE 2****: Peripheral Support System (B)**
   A Turbine
   A0 Turbine Axial Shaft
   A3 Peripheral Rotating Ring
   B Peripheral Support System
**FIGURE 3****: Bearing Peripheral Support System (B1)**
   B1 Peripheral Bearing Support System
   B1/01 Fixed Peripheral Bearing Support Element
   B1/02 Washer Rotating Element
   B1/03 Bearing Transition Element
   B1/04 Non-Conventional Axial Bearing
**FIGURE 4****: fixed element of the peripheral support (B1/01)**
   404 Adjacent Outer Wind Cell Section
   501 Aerodynamic Inner Wind Cell Chamber
   503 Front Section of the Aerodynamic Inner Wind Chamber
   504 Critical Space
   505 Rear Section of the Aerodynamic Inner Wind Chamber
   B1/01 fixed element of the peripheral support
   B1/01-E Inlet Section of fixed element of the peripheral support
   B1/01-S Outlet Section of fixed element of the peripheral support
**FIGURE 5****: Inlet Section of fixed element of the peripheral support (B1/01-E)**
   A0 Turbine Axial Shaft
   B1/01-E Inlet Section of fixed element of the peripheral support
   B1/01-E1 Circular Cavity of the Inlet Section
   B1/01-E2 Support Structure of Inlet Section
   B1/01-E2C Circular Support
   B1/01-E2R Radial Beams
   B1/01-E2S Square Support
   B1/01-E2H Horizontal Beams
   B1/01-E2A Anchorage
   B1/03-E Inlet Section of Bearing Transition Element
**FIGURE 6****: Outlet Section of fixed element of the peripheral support (B1/01-S)**
   A0 Turbine Axial Shaft
   B1/01-S Outlet Section of fixed element of the peripheral support
   B1/01-S1 Circular Cavity of Outlet Section
   B1/01-S2 Support Structure of Inlet Section
   B1/01-S2C Circular Support
   B1/01-S2R Radial Beams
   B1/01-S2S Square Support
   B1/01-S2H Horizontal Beams
   B1/01-S2A Anchorage
   B1/03-S Outlet Section of Bearing Transition Element
**FIGURE 7****: Washer Rotating Element (B1/02)**
   A Turbine
   A0 Turbine Axial Shaft
   A3 Peripheral Rotating Ring
   B1/02 Washer Rotating Element
   B1/02-Al Inner Ring Rotating Washer
   B1/02-AE Outer Ring of Rotating Element
   B1/04 Non-Conventional Axial Bearing
   B1/04-AG Rotating Washer
   B1/04-BE Inlet Ball Bed
   B1/04-BS Outlet Ball Bed
   C1 Main Gear
   C1/01-Al Main Gear Inner Ring
**FIGURE 8****: Bearing Transition Element (B1/03)**
   B1/01 fixed element of the peripheral support
   B1/01-E1 Inlet Section Circular Cavity
   B1/01-S1 Outlet Section Circular Cavity
   B1/02 Rotating Washer Element
   B1/03 Bearing Transition Element
   B1/03-E Inlet Section of Bearing Transition Element
   B1/03-E1 Circular Walls of Bearing Transition Element
   B1/03-E1 Inlet Circular Walls
   B1/03-E2 Inlet Circular Protrusions
   B1/03-S Outlet Section of Bearing Transition Element
   B1/03-S1 Circular Outlet Walls
   B1/03-S2 Circular Outlet Protrusions
   B1/04-B Non-Conventional Axial Bearing Ball Beds B1/04-BE Non-Conventional Axial Bearing Ball Bed
   B1/04-BE Non-Conventional Axial Bearing Inlet Ball Bed
   B1/04-BS Non-Conventional Axial Bearing Outlet Ball Bed
**FIGURE 9****: Non-Conventional Axial Bearing (B1/04)**
   B1/04 Non-Conventional Axial Bearing
   B1/04-AG Rotating Washer
   B1/04-B Non-Conventional Axial Bearing Ball Beds
   B1/04-BE Non-Conventional Axial Bearing Inlet Ball Bed
   B1/04-BS Non-Conventional Axial Bearing Outlet Ball Bed
   A0 Axial Turbine Shaft

### DETAILED DESCRIPTION OF THE INVENTION AND PREFERRED EMBODIMENTS

The definition and incorporation of the Wind Cell (WO2021034203, "Wind Wall") in the present description is made merely as part of the context necessary for the proper description of the components of the invention.

The Wind Cell:
The Wind Cell (301, 302), according to Figure 1, is to be understood as that aerodynamic and individual structure, functional by itself, capable of amplifying the wind speed, characterized by being formed by an Adjacent External Section (404), an Aerodynamic Internal Chamber (501) and Critical Space (504); where the Critical Space (504) is that space located between the Front Section (503) and the Rear Section (505), characterized by presenting the highest wind speed records.

In this sense, for the present description of the invention, Critical Space (504) should be understood as that space where the Peripheral Support Turbine (A) of the wind system is suitable to be located.

In more detail, the present invention refers to a Peripheral Bearing Support System (B1) suitable for stably supporting the Peripheral Support Turbine (A) by means of a peripheral bearing and by being composed of a fixed element of the peripheral support (B1/01), a Rotating Washer Element (B1/02), a Bearing Transition Element (B1/03) and a Non-Conventional Axial Bearing (B1/04), according to Figure 3.

Wherein the Peripheral Bearing Support System (B1) comprises a fixed element of the peripheral support (B1/01) comprising an Inlet Section (B1/01-E) and an Outlet Section (B1/01-S), wherein each section comprises a Circular Cavity (B1/01-E1 or B1/01-S1 as applicable) receiving one of the sections (B1/03-E or B1/03-S, as applicable) of the Bearing Transition Element (B1/03), and further comprising a Washer Rotating Element (B1/02) and two Ball Beds (B1/04-B) each arranged on the sides of the Washer Rotating Element (B1/02), wherein each Ball Bed (B1/04-B) is between said Washer Rotating Element (B1/02) and the sections of the Bearing Transition Element (B1/03).

### · Fixed Element of the Peripheral Support:

The Fixed Element of the Peripheral Support (B1/01) is characterized by being a structure attached to the inner part of the Critical Space (504) of the Wind Cell (301, 302) and serves as a support for the Bearing Transition Element (B1/03) and, finally, for the Washer Rotating Element (B1/02). Additionally, the Fixed Element of the Peripheral Support (B1/01) is characterized by being composed of two parts: the Inlet Section (B1/01-E) and the Outlet Section (B1/01-S), according to Figure 4, wherein the Inlet Section (B1/01-E) has the same features as the Outlet Section (B1/01-S) and they are arranged opposite each other.

### Inlet Section:

The Inlet Section (B1/01-E) of the Fixed Element of the Peripheral Support (B1/01), as shown in Figure 5, is characterized by containing a Circular Cavity (B1/01-E1) to receive the Inlet Section (B1/03-E) of the Bearing Transition Element (B1/03) and presenting a Support Structure (B1/01-E2) that supports said Inlet Section (B1/03-E) by means of supports that are connected and supported on the Adjacent External Section (404) and the Front Section (503) of the Aerodynamic Internal Chamber (501), according to Figure 4.

The Circular Cavity (B1/01-E1) of the Inlet Section (B1/01-E), according to Figure 8, is characterized by being formed by two circular walls perpendicular to the axial and radial direction of the Axial Shaft (A0) respectively, arranged in such a way as to prevent the axial and radial displacement of the Inlet Section (B1/03-E) of the Bearing Transition Element (B1/03).

The Support Structure (B1/01-E2) of the Inlet Section (B1/01-E), according to Figure 5, is characterized by the following parts: the Circular Support (B1/01-E2C), the Radial Beams (B1/01-E2R), the Square Support (B1/01-E2S), the Horizontal Beams (B1/01-E2H) and the Anchorage (B1/01-E2A); wherein the Circular Support (B1/01-E2C) is characterized by containing and surrounding the Circular Cavity (B1/01-E1), being axially connected to the Front Section (503) of the Aerodynamic Internal Chamber (501) and being radially supported by the Radial Beams (B1/01-E2R); wherein the Radial Beams (B1/01-E2R) are characterized by having a number of pillars radially connecting the Circular Support (B1/01-E2C) to each side of the Square Support (B1/01-E2S) such that radial movement of the Circular Support (B1/01-E2C) is restricted and fixed vertically; wherein the Square Support (B1/01-E2S) is a projected extension of, and attached to, the Adjacent Outer Section (404); wherein the Horizontal Beams (B1/01-E2H) are characterized by having a number of horizontal beams connecting the Square Support (B1/01-E2S) to each of the vertices of the wall surrounding and containing the circular hole of the Inlet Opening (406) of the Wind Cell (301, 302), such that the axial movement of the Circular Support (B1/01-E2C) is restricted and fixed horizontally; wherein the Anchorage (B1/01-E2A) is characterized for being fasteners whose protuberances are fixed to each of the corners of the Square Support (B1/01-E2S) being the function thereof to connect the Inlet Section (B1/01-E) to the Outlet Section (B1/01-S) of the Fixed Element of the Peripheral Support (B1/01) in such a way that both sections are fixed one to the other, constituting together the Fixed Element of the Peripheral Support (B1/01).

It should be noted that the number, length, thickness, material and shape of the component parts of the Support Structure (B1/01-E2) of the Inlet Section (B1/01-E) will depend on the weight and the axial and radial forces to which the Circular Support (B1/01-E2C) will be subjected.

### Outlet Section:

The Outlet Section (B1/01-S) of the Fixed Element of the Peripheral Support (B1/01), as shown in Figure 6, is characterized by containing a Circular Cavity (B1/01-S1) to receive the Outlet Section (B1/03-S) of the Bearing Transition Element (B1/03) and presenting a Support Structure (B1/01-S2) that supports said Outlet Section (B1/03-S) by means of supports that are connected and supported on the Adjacent External Section (404) and the Rear Section (505) of the Aerodynamic Internal Chamber (501), according to Figure 4.

The Circular Cavity (B1/01-S1) of the Outlet Section (B1/01-S), according to Figure 6, is characterized by being formed by two circular walls perpendicular to the axial and radial direction of the Axial Shaft (A0) respectively, arranged in such a way as to prevent the axial and radial displacement of the Outlet Section (B1/03-S) of the Bearing Transition Element (B1/03).

The Support Structure (B1/01-S2) of the Outlet Section (B1/01-S), according to Figure 6, is characterized by the following parts: the Circular Support (B1/01-S2C), the Radial Beams (B1/01-S2R), the Square Support (B1/01-S2S), the Horizontal Beams (B1/01-S2H) and the Anchorage (B1/01-S2A); wherein the Circular Support (B1/01-S2C) is characterized by containing and surrounding the Circular Cavity (B1/01-S1), being axially connected to the Rear Section (505) of the Aerodynamic Inner Chamber (501) and being radially supported by the Radial Beams (B1/01-S2R); wherein the Radial Beams (B1/01-S2R) are characterized by having a number of pillars radially connecting the Circular Support (B1/01-S2C) to each side of the Square Support (B1/01-S2S) such that radial movement of the Circular Support (B1/01-S2C) is restricted and fixed vertically; wherein the Square Support (B1/01-S2S) is a projected extension of, and attached to, the Adjacent Outer Section (404); wherein the Horizontal Beams (B1/01-S2H) are characterized by having a number of horizontal beams connecting the Square Support (B1/01-S2S) to each of the vertices of the wall surrounding the circular hole of the Outlet Opening (407) of the Wind Cell (301, 302), such that the axial movement of the Circular Support (B1/01-S2C) is restricted and fixed horizontally; wherein the Anchorage (B1/01-S2A) is characterized by being fasteners whose protuberances are fixed to each of the corners of the Square Support (B1/01-S2S) being the function thereof to connect the Outlet Section (B1/01-S) to the Inlet Section (B1/01-E) of the Fixed Element of the Peripheral Support (B1/01) in such a way that both sections are fixed one to the other, jointly constituting the Fixed Element of the Peripheral Support (B1/01).

It should be noted that the number, length, thickness, material and shape of the component parts of the Support Structure (B1/01-S2) of the Outlet Section (B1/01-S) will depend on the weight and the axial and radial forces to which the Circular Support (B1/01-S2C) will be subjected.

### · Washer Rotating Element:

The Washer Rotating Element (B1/02) is a circular structure located at the height of the Critical Space (504) of the Wind Cell (301, 302), characterized by revolving around the Axial Shaft (A0) and by presenting three sections: the Washer Rotating Inner Ring (B1/02-AI), the Rotating Washer (B1/04-AG) and the Washer Rotating Outer Ring (B1/02-AE), according to Figure 7.

The Inner Rotating Ring Washer (B1/02-AI) is characterized for being the section where the Peripheral Rotating Ring (A3) of the Peripheral Support Turbine (A) will be fixed to the Peripheral Bearing Support System (B1), so it must be understood that the rotation speed of the Rotating Washer Element (B1/02) will always be in synchrony with the rotation speed (or revolutions per minute) of the Peripheral Support Turbine (A).

The Rotating Washer (B1/04-AG) is a radially extended section composed of a double race washer of the Non-Conventional Axial Bearing (B1/04), characterized by being in contact with, and in the middle of, the Inlet Ball Bed (B1/04-BE) and the Outlet Ball Bed (B1/04-BS), where the rotating washer (B1/04-AG) is attached on the inner side to the inner rotating ring washer (B1/02-AI) and on the outer side to the outer rotating ring washer (B1/02-AE);

The Outer Rotating Ring Washer (B1/02-AE) is characterized by having the same diameter as the Main Gear Inner Ring (C1/01-AI) and, in addition, by being the section where the Main Gear (C1) will be fixed, as a mechanical element to transfer the torque, generated by the revolutions of the Peripheral Support Turbine (A), to an ad hoc power transmission system.

### · Bearing Transition Element:

The Bearing Transition Element (B1/03) is characterized by being composed of an Inlet Section (B1/03-E) and an Outlet Section (B1/03-S) which in turn jointly form a means of support between the fixed element of the peripheral support (B1/01) and the Ball Beds (B1/04-B) that come into contact on the Rotating Washer Element (B1/02), according to Figure 8.

The Inlet Section (B1/03-E) of the Bearing Transition Element (B1/03) is a circular, modular and interchangeable structure, characterized by having two Circular Walls (B1/03-E1) perpendicular to the axial and radial direction of the Axial Shaft (A0), so that the Inlet Section (B1/03-E) of the Bearing Transition Element (B1/03) fits and is fixed inside the Circular Cavity (B1/01-E1) of the Inlet Section (B1/01-E) of the Fixed Element of the Peripheral Support (B1/01) and, further characterized by having two Circular Protrusions (B1/03-E2) serving as attachment points for the supports of an Inlet Ball Bed (B1/04-BE) of the Non-Conventional Axial Bearing (B1/04), as shown in Figure 8.

The Outlet Section (B1/03-S) of the Bearing Transition Element (B1/03) is a circular, modular and interchangeable structure, characterized by having two Circular Walls (B1/03-S1) perpendicular to the axial and radial direction of the Axial Shaft (A0), so that the Outlet Section (B1/03-S) of the Bearing Transition Element (B1/03) fits and is fixed inside the Circular Cavity (B1/01-S1) of the Outlet Section (B1/01-S) of the Fixed Element of the Peripheral Support (B1/01) and, further characterized by having two Circular Protrusions (B1/03-S2) serving as fixing points for the supports of an Outlet Ball Bed (B1/04-BS) of the Non-Conventional Axial Bearing (B1/04), as shown in Figure 8.

### · Non-Conventional Axial Bearing:

The Non-Conventional Axial Bearing (B1/04) is a single direction, ball or cylinder axial bearing, angular contact or not, characterized by being composed of a Rotating Washer (B1/04-AG) and two Ball Beds (B1/04-B); and for presenting an non-conventional arrangement of the parts of an axial bearing, wherein the Rotating Washer (B1/04-AG) must always be located in the middle of the axial bearing between the two Ball Beds (B1/04-B) so that the Rotating Ring (B1/04-AG) can rotate freely around the Axial Shaft (A0), according to Figure 9.

The Rotating Washer (B1/04-AG) is a double track shaft washer, characterized by revolving around the Axial Shaft (A0), which is contained within the rotating washer element (B1/02) and which is in contact with, and in between, the Inlet Ball Bed (B1/04-BE) and the Outlet Ball Bed (B1/04-BS).

The Ball Beds (B1/04-B) can be either a ball bed or a cylinder bed indistinctly, characterized by facilitating the free revolution of the Rotating Washer (B1/04-AG) around the Axial Shaft (A0) and by receiving a different nomenclature depending on its location: Inlet Ball Bed (B1/04-BE) when located between the Rotating Washer (B1/04-AG) and the Inlet Section (B1/03-E) of the Bearing Transition Element (B1/03); Outlet Ball Bed (B1/04-BS) when located between the Rotating Washer (B1/04-AG) and the Outlet Section (B1/03-S) of the Bearing Transition Element (B1/03).

The Inlet Ball Bed (B1/04-BE) is characterized by being supported by the Inlet Section (B1/03-E) of the Bearing Transition Element (B1/03) such that said ball bed (or cylinder bed) is motionless, but wherein the balls (or cylinders) are free to rotate upon contact with the Rotating Washer (B1/04-AG), whereby the Rotating Washer (B1/04-AG) is the one that rotates and the Inlet Ball Bed (B1/04-BE) is the one that remains fixed.

The Outlet Ball Bed (B1/04-BS) is characterized by being supported by the Outlet Section (B1/03-S) of the Bearing Transition Element (B1/03) such that the ball bed (or cylinder bed) is non-moving, but wherein the balls (or cylinders) are free to rotate upon contact with the Rotating Washer (B1/04-AG), whereby the Rotating Washer (B1/04-AG) is the one that rotates and the Outlet Ball Bed (B1/04-BS) is the one that remains fixed.

On the other hand, the Non-Conventional Axial Bearing (B1/04), because it is a component of large dimensions (several meters in diameter) that does not need to support neither the axial load nor the speed of revolutions of conventional bearings, is characterized by being able to be built through a number of arcs, individual and identical, in such a way that by joining the arcs, the complete circular structure of the Non-Conventional Axial Bearing (B1/04) can be obtained. This overcomes the technical limitation of building a large bearing in a single piece.

It should be noted that the Peripheral Bearing Support System (B1) offers a peripheral support mechanism based on a peripheral bearing, ideal for those conditions where a robust system is required to support an excessive weight of the Peripheral Support Turbine (A).

It should be noted that the present invention is not limited to the preferred embodiments illustrated in the figures and described above in detail. Persons skilled in the art should recognize that other arrangements may be devised, for example, various shapes and sizes of modules of various materials, connected to various structures and objects and to each other in various ways. The invention covers all possible combinations of the various features of each embodiment described. It is clarified that modifications and variations of the invention can be constructed without departing from the spirit and scope of what is protected by the set of claims.

## Claims

1. A peripheral bearing support system **CHARACTERIZED BY** being suitable for stably supporting a peripheral support turbine by a peripheral bearing, and comprising a fixed element of the peripheral support (B1/01), a rotating washer element (B1/02), a bearing transition element (B1/03), and a non-conventional axial bearing (B1/04);
wherein the fixed element of the peripheral support (B1/01) includes an inlet section of the fixed element of the peripheral support (B1/01-E) and an outlet section of the fixed element of the peripheral support (B1/01-S); wherein each section comprises a circular cavity (B1/01-E1 or B1/01-S1, as appropriate) and wherein each cavity accommodates either an inlet section of the bearing transition element (B1/03-E) or an outlet section of the bearing transition element (B1/03-S);
wherein the rotating washer element (B1/02) is positioned in between the two ball beds (B1/04-B) of the non-conventional axial bearing (B1/04); wherein each ball bed (B1/04-B) is between said rotating washer element (B1/02) and one of the sections of the bearing transition element (B1/03).

2. The peripheral bearing support system according to claim 1, **CHARACTERIZED IN THAT** the inlet section of the fixed element of the peripheral support (B1/01-E) comprises a circular cavity (B1/01-E1) and further a support structure (B1/01-E2);
wherein the circular cavity (B1/01-E1) is formed by two circular walls perpendicular to the axial and radial direction of the axial shaft (A0), arranged in such a way as to prevent axial and radial displacement of the inlet section of the bearing transition element (B1/03-E);
wherein the support structure (B1/01-E2) comprises the following parts: a circular support (B1/01-E2C), radial beams (B1/01-E2R), a square support (B1/01-E2S), horizontal beams (B1/01-E2H) and an anchorage (B1/01-E2A); wherein the circular support (B1/01-E2C) contains and surrounds the circular cavity (B1/01-E1), is axially connected to the front section (503) of the aerodynamic inner chamber (501) and is radially supported by the radial beams (B1/01-E2R); wherein the radial beams (B1/01-E2R) have a number of pillars that are radially connected between the circular support (B1/01-E2C) and each of the sides of the square support (B1/01-E2S) such that the radial movement of the circular support (B1/01-E2C) is restricted and fixed vertically; wherein the square support (B1/01-E2S) is a projected extension of, and attached to, the adjacent outer section (404); wherein the horizontal beams (B1/01-E2H) horizontally connect the square support (B1/01-E2S) to an external fixed support such that the axial movement of the circular support (B1/01-E2C) is restricted and fixed horizontally; wherein the anchorage (B1/01-E2A) are fasteners whose protrusions are fixed to each of the corners of the square support (B1/01-E2S), the function thereof being to connect the inlet section (B1/01-E) to the outlet section (B1/01-S) of the fixed element of the peripheral support (B1/01) in such a way that both sections are fixed to each other;
wherein the outlet section of the fixed element of the peripheral support (B1/01-S) has the same features as the inlet section of the fixed element of the peripheral support (B1/01-E), together constituting the fixed element of the peripheral support (B1/01).

3. The peripheral bearing support system according to claim 1, **CHARACTERIZED IN THAT** the rotating washer element (B1/02) is suitable for revolving around the axial shaft (A0) of the peripheral support turbine (A) and comprises three sections: the rotating inner ring washer (B1/02-AI), the rotating washer (B1/04-AG) and the rotating outer ring washer (B1/02-AE);
wherein the inner rotating ring washer (B1/02-AI) is the section where the peripheral rotating ring (A3) of the peripheral support turbine (A) is fixed to the rotating element washer (B1/02);
wherein the rotating washer (B1/04-AG) is a radially extended section comprising a non-conventional axial bearing double track washer (B1/04), which is in contact with, and in between, an inlet ball bed (B1/04-BE) and an outlet ball bed (B1/04-BS); wherein the rotating washer (B1/04-AG) is attached on the inner side to the inner rotating ring washer (B1/02-AI) and on the outer side to the outer rotating ring washer (B1/02-AE);
wherein the outer rotating ring washer (B1/02-AE) has the same diameter as the inner ring of the main gear (C1/01-AI) and, moreover, is the section where the main gear (C1) is fixed.

4. The peripheral bearing support system according to claim 1, **CHARACTERIZED IN THAT**
the inlet section of the bearing transition element (B1/03-E) is a circular, modular and interchangeable structure having two circular walls (B1/03-E1) perpendicular to the axial and radial direction of the axial shaft (A0), such that the inlet section (B1/03-E) of the bearing transition element (B1/03) fits and is fixed inside the circular cavity (B1/01-E1) of the inlet section of the fixed element of the peripheral support (B1/01-E); wherein, in addition, it has two circular protrusions (B1/03-E2) serving as fixing points for the supports of an inlet ball bed (B1/04-BE) of the non-conventional axial bearing (B1/04), such that said ball bed is fixed, motionless, but wherein the balls are free to rotate upon contact with the rotating washer (B1/04-AG) of the rotating washer element (B1/02), wherein the rotating washer (B1/04-AG) is the one that rotates and the inlet ball bed (B1/04-BE) is the one that remains fixed to the inlet section of the bearing transition element (B1/03-E);
wherein the outlet section of the bearing transition element (B1/03-S) has the same features as the inlet section of the bearing transition element (B1/03-E), together constituting the bearing transition element (B1/03).

5. The peripheral bearing support system according to claim 1, **CHARACTERIZED IN THAT** the non-conventional axial bearing (B1/04) is modularly built through a number of arcs, individual and identical, such that by joining the arcs together one has the complete circular structure of the non-conventional axial bearing (B1/04), which comprises a rotating washer (B1/04-AG) and two ball beds (B1/04-B); wherein the two ball beds (B1/04-B) are attached to the bearing transition element (B1/03); wherein the rotating washer (B1/04-AG) is located between the two ball beds (B1/04-B) to allow free revolution of the rotating washer (B1/04-AG) around the axial shaft (A0);
wherein the rotating washer (B1/04-AG) is a double track washer, which revolves about the axial shaft (A0), which is contained within the rotating washer element (B1/02) and which is in contact with, and in between, the inlet ball bed (B1/04-BE) and the outlet ball bed (B1/04-BS);
wherein the ball bed (B1/04-B) is a ball bed or cylinder bed interchangeably, suitable to receive a different nomenclature depending on its location: inlet ball bed (B1/04-BE) when located between the rotating washer (B1/04-AG) and the inlet section of the bearing transition element (B1/03-E), and outlet ball bed (B1/04-BS) when located between the rotating washer (B1/04-AG) and the outlet section of the bearing transition element (B1/03-S);
wherein the inlet ball bed (B1/04-BE) is supported by the inlet section of the bearing transition element (B1/03-E) in such a manner that said ball bed remains non-moving, but wherein the balls remain free to rotate upon contact with the rotating washer (B1/04-AG), whereby the rotating washer (B1/04-AG) is the one that rotates and the inlet ball bed (B1/04-BE) is the one that remains fixed;
wherein the outlet ball bed (B1/04-BS) is supported by the outlet section (B1/03-S) of the bearing transition element (B1/03) such that the outlet ball bed (B1/04-BS) remains motionless, but wherein the balls are free to rotate upon contact with the rotating washer (B1/04-AG), whereby the rotating washer (B1/04-AG) is the one that rotates and the outlet ball bed (B1/04-BS) is the one that remains fixed.
